Europäisches Patentamt

European Patent Office

Office européen des brevets

(11) Publication number: **0 131 909**
A2

# (12) EUROPEAN PATENT APPLICATION

(21) Application number: **84108157.3**

(51) Int. Cl.⁴: **B 60 N 3/08**

(22) Date of filing: **11.07.84**

(30) Priority: **19.07.83 IT 6777583**

(43) Date of publication of application:
**23.01.85 Bulletin 85/4**

(84) Designated Contracting States:
**DE FR GB**

(71) Applicant: FOGGINI PROGETTI S.r.l.
Via Aosta, 17
I-10092 Beinasco Torino(IT)

(72) Inventor: Foggini, Giovanni
Corso Matteotti, 23
I-10121 Torino(IT)

(74) Representative: Modiano, Guido et al,
MODIANO, JOSIF, PISANTY & STAUB Modiano &
Associati Via Meravigli, 16
I-20123 Milan(IT)

(54) Device for the restraint and controlled opening of tilting elements, particularly of recessed mount ashtrays for motor vehicles.

(57) The device enables a generic element to be opened and closed on the simple application of an operating pressure force and comprises a cylindrical case (12) wherein a rod (18) carrying at least two wings (18a) is slidable which is adapted to either move through a port in a diaphragm (26) or get stuck in the diaphragm in connection with angular displacement movements of the rod produced by a pair of serrations (24-25) on the case.

Fig. 1

EP 0 131 909 A2

"DEVICE FOR THE RESTRAINT AND CONTROLLED OPENING OF TILTING ELEMENTS, PARTICULARLY OF RECESSED MOUNT ASHTRAYS FOR MOTOR VEHICLES"

This invention relates to a device for the restraint and controlled opening of tilting elements, particularly of recessed mount ashtrays for motor vehicles.

More specifically, the invention is concerned with a device for the restraint of tilting panels, of a type which enables a panel to be closed and released through an identical operation consisting of exerting on the panel itself a moderate pressure force. Devices of this general type are known, inter alia, for the restraint of recessed mount ashtrays as installed in motor vehicles, the term recessed mount ashtray referring herein to an ashtray which comprises a tilting bowl which can be swung out of or back into a specially provided enclosure covered by a panel rigidly attached to the bowl itself.

Prior devices of the type specified above make use of cam and dog arrangements wherein an elastic means forces the dog to follow a preset cam profile with differentiated profile portions selectively engaged by the dog during the respective ashtray (or panel) opening and closing phases. Such prior devices, additionally to involving a considerable mechanical and constructional complexity which adversely affects manufacturing costs and operation reliability, have the disadvantage of snapping the panel open. This opening action, which is due to the elastic means incorporated to the device, on the one side results in the application of impact loads to the structure which may damage its material and in noisy operation, and on the other side, may cause the ashtray contents to be flung out.

This invention is essentially directed to remove such drawbacks. In particular, the task of this invention is to provide a tilting element restraint and opening device for operation as specified, which has a simplified construction and can operate without jamming in a most reliable manner. The invention is also directed to provide a self-contained construction device which involves no complex moulding of the panel as a whole and of the ashtray bowl in particular for its application, as is required instead by known devices wherein the cited camming profiles are to be formed either on the walls of said bowl or on a holder matched to it.

Another no less important object of this invention is to provide a device which affords a controlled opening of the panel, or ashtray, in the sense that said panel, being biased toward its open position by an elastic means, is then restrained by the device itself which slows down its opening movement against the bias force of the elastic means. This, in addition to eliminating shocks, provides a quiet tilting movement of said panel or ashtray.

A further important object of this invention is to provide a device which, thanks to its self-contained construction, may be readily replaced in case of failure without involving replacement of the panel or ashtray as a whole.

This task and these objects, as well as others which will become apparent in the course of the detailed description to follow, are achieved by a device for the restraint and controlled opening of tilting elements, and in particular recessed mount ashtrays, the essential characteristic whereof resides in that it comprises a cylindrical case receiving slidably therein under the braking action of an intervening elastic seal a rod having a centre portion provided with at least two opposed wings adapted to pass through a contoured port formed in a case diaphragm, or upon rotation of said rod, to get stuck in said diaphragm; the case further including two opposed serrations adapted to operatively engage with said wings and additional wing segments carried on a rod head, to thereby produce angular movements of said rod causing said wings to pass through the port and to get stuck in the case diaphragm, respectively.

Of preference, the contoured port in the diaphragm is in the form of a cross with four arms at 90° from each other, and each tooth of the opposed serrations, having a wedge-like profile (sawtooth), produces, by engagement with the wings on the centre portion and wing segments on the rod head, an angular displacement of said rod which is equal to one fourth of a right angle. Thus, four corresponding operative phases are provided, from the rod passage through and tripping against the case diaphragm, which are completed by means of corresponding axial forces applied to the rod in opposite directions. The device case is hingedly connected to the rigid structure and the rod to the panel (ashtray), or vice versa; the panel is biased toward its open position by a spring, so that the two compressive axial forces on the rod are produced by corresponding manual pressures exerted on the panel to open and close it, while the extension ones are produced by the spring action.

The invention will be now described in detail with reference to the accompanying drawings, given herein by way of example and not of limitation, and where:

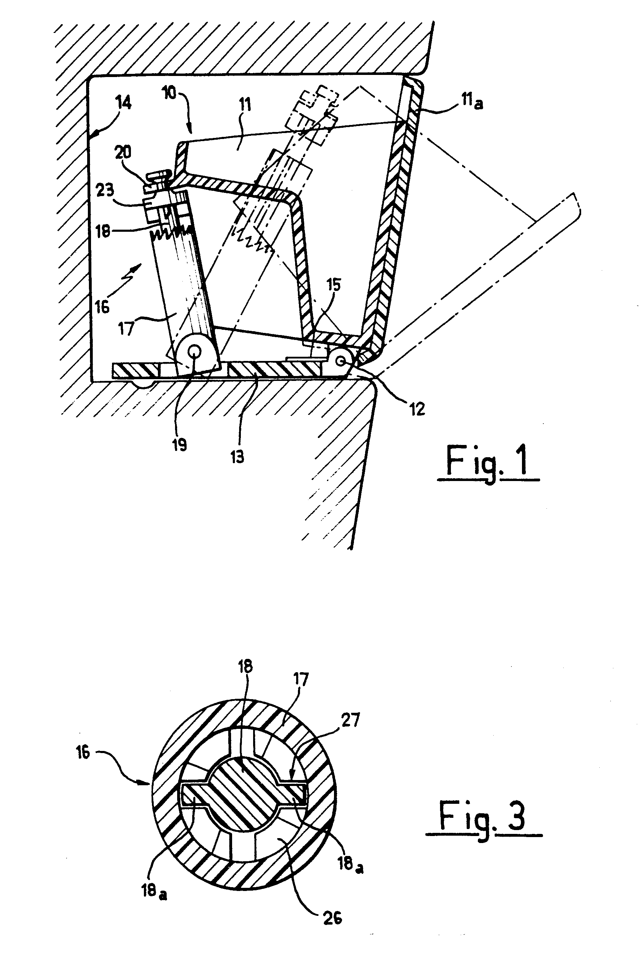

Figure 1 is a midsectional view of a recessed mount ashtray with tilting bowl as incorporating the device of this invention;

Figure 2 is an axial section view showing in detail said device to an enlarged scale;

Figure 3 is a sectional view taken along the line III-III of Figure 2; and

Figures 4 to 7 each show, in full view and in section, the four sequential angular and axial positions of the rod for the conditions of restraint and release of the device.

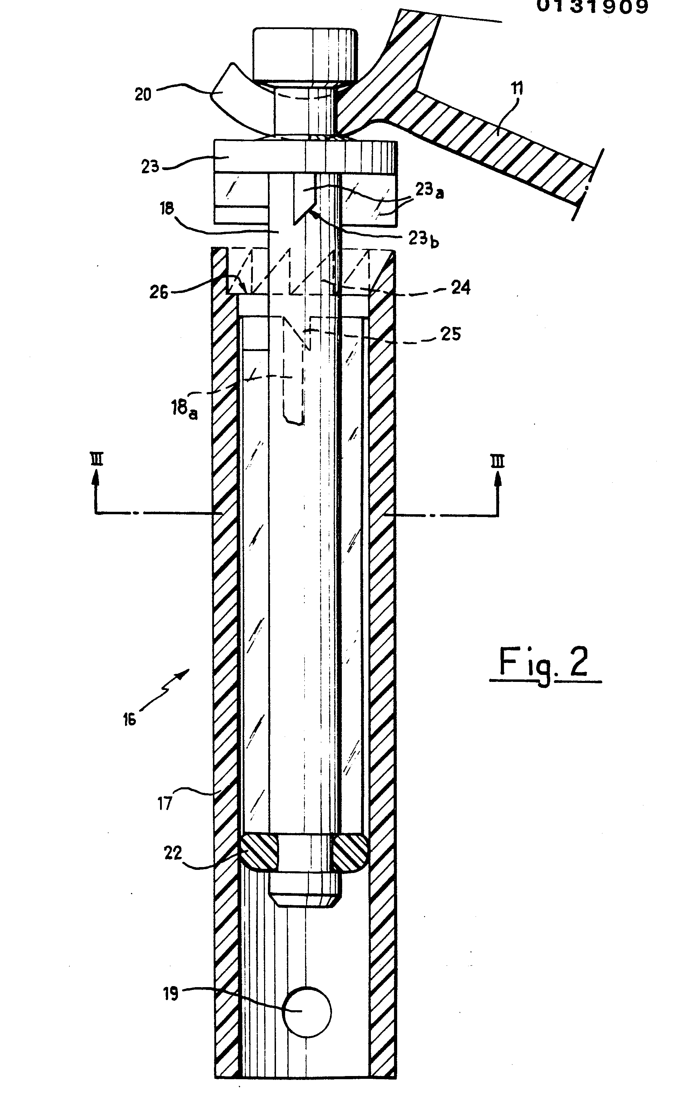

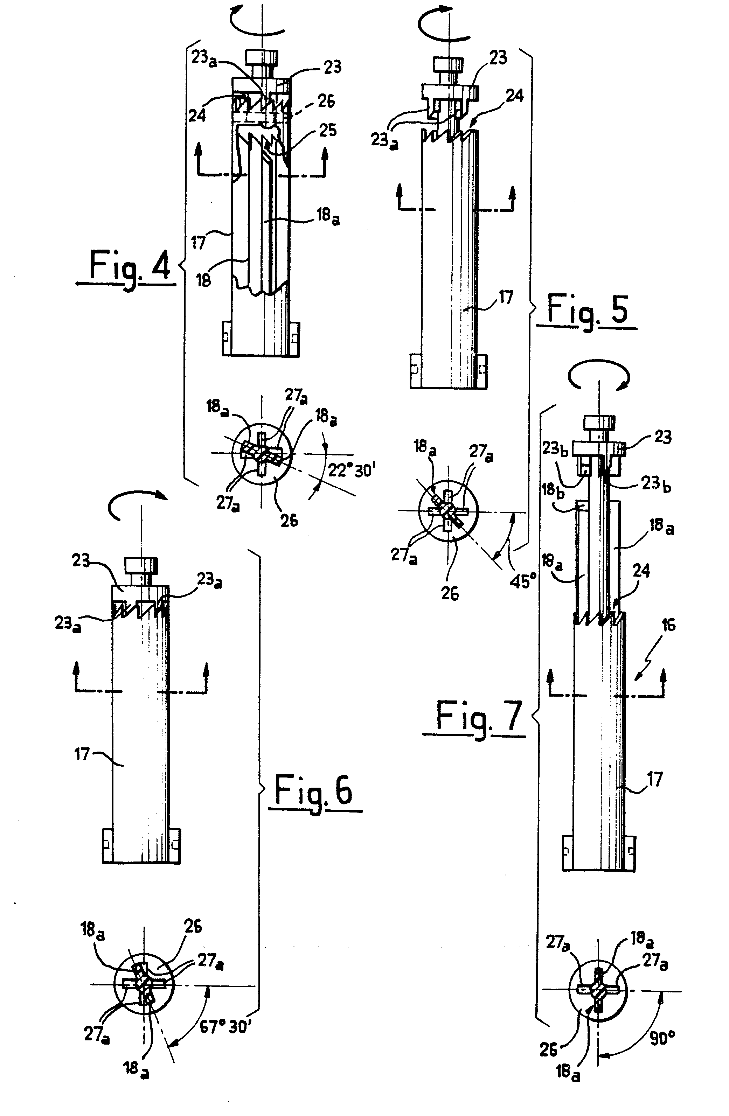

In the drawings, the numeral 10 generally designates a recessed mount ashtray of the type which includes a bowl 11 swingingly connected, by means of a pivot pin 12, to a rigid support 13. The bowl 11 is received out of view within a housing 14 which is covered by a front panel 11a attached to the

0131909

bowl and can be drawn out of the housing and moved by tilting into the in-use position indicated with dash lines in the drawing. A pin spring 15 wound around the pin 12 biases the bowl toward said tilted out in-use position. Between the support 13 and bowl 11 there is interposed the device of this invention, as generally indicated at 16. It essentially comprises a cylindrical case 17 wherein a rod 18 can slide telescopically. The case is pivotally connected, as by means of a pivot pin 19, to the rigid support 13 and the rod is connected in unrestricted pivotal relationship with the bowl by means of a yoke 20 made rigid with the latter and engaging with an end groove on the rod. The rod end which penetrates the case is provided with a retaining seat for a ring seal 22 of an elastomeric material which, by frictionally engaging with the case inner surface, slows the rod axial movements down. Provided on the centre portion of the rod body are at least two longitudinal wings 18a, at diametrically opposed locations, which end near a head collar 23, thereby a gap of preset length is left between said collar and the wing ends. That face of the head collar 23 which sees the wings 18a carries, in turn, wing segments 23a extending on an extension line from the wings 18a; the wings and wing segments have opposed bevels 23b and 18b, respectively (Figures 2 and 7). The end of the case 17, opposed to the one pivotally connected at 19, correspondingly carries two serrations, respectively an outer one 24 and inner one 25. The serrations have

sawtooth profiles with 45° inclines matching respectively the bevels 23b of the wing segments and 18b of the wings.

Further, the serration angular pitch is equal to one fourth of a right angle, thereby for each tooth of the serrations there corresponds an angular displacement of 22 degrees 30 minutes. Located within the case 17 between the serrations 24 and 25 is a tripping diaphragm 26 formed with a contoured port 27. The port 27 comprises a centre zone for letting the rod 18 through and four arms 27a extending at 90° from each other; each pair of opposed arms being adapted to allow the wings 18a therethrough as the latter are aligned to them. By contrast, a rotation imparted to the rod 18 while it is deeply set within the case, causes the wings 18a to become stuck against the diaphragm 26, thereby the rod cannot be further extended.

Thus, the operation of the device, shown in the sequence of Figures 4 to 7, may be appreciated by the following description.

On pushing the bowl 11 into its housing by applying a pressure with one finger to the panel 11a, the rod 18 telescopes into the case 17 and the wing segments 23a, by contacting the outer serration 24, cause a first pivotal movement of the rod (Figure 4) the wings 18a whereof have in the meantime moved past the tripping diaphragm 26. On releasing the pressure from the panel, the pin spring 15 biasing the bowl 11 tends to cause the rod 18 to extend, thereby the wings 18a will contact the inner serration 25 and by engaging with it cause a further pivotal movement of the rod which reaches its stable stuck position whereat the wings 18a are at 45° between two arms of the port 27 (Figure 5); the pivotal movements of the rod occurring each, as mentioned, through 22 degrees 30 minutes.

From the stuck position, the bowl is released for opening by again pushing on the panel 11a, thus first engaging the segments 23a with the outer serration 24, and then engaging the wings 18a with the inner serration 25. This double engagement is also followed by an overall pivotal movement of the rod through 45° which brings the wings 18a into alignment to the arms of the contoured port 27, thereby the wings will move past the tripping diaphragm 26 and the rod extend by the action of the spring 15 (Figure 7). The rod outward movement is slowed down by the frictional engagement of the seal 22 with the inside surface of the case, and the tilting out movement of the bowl 11 will occur smoothly without jerks and shocks.

Of course, within the same inventive principle, the constructional details and embodiments of the invention may be changed within wide limits with respect to what has been described and illustrated herein by way of example only, without departing from the true scope thereof. In particular, the rod 18 may be provided with four or more wings for passage through a port correspondingly formed in the tripping diaphragm. Likewise, if the securing method is such that the tilting movement of the bowl results in the rod being compressed rather than extended, then the rod construction will be reversed in the sense that the wings 18a will extend from the head collar 23 and the wing segments located at the inward end of the rod.

A further modification within the scope of this invention could provide for replacement of the pin spring 15 with a compression coil spring (or a tension coil spring) incorporated to the device; the seat for such a spring being formed, for example, within an axial cylindrical cavity through the rod 18.

## CLAIMS

1. A device for the restraint and controlled opening of tilting elements, particularly of recessed mount ashtrays for motor vehicles, operable by a moderate pressure, characterized in that it comprises a cylindrical case (12) receiving slidably therein, under the braking action of an intervening elastic seal (22), a rod (18) having a centre portion provided with at least two opposed wings (18a) adapted to pass through a contoured port (27) formed in a case diaphragm (26), or upon rotation of said rod (18), to get stuck in said diaphragm (26); the case (12) further including two opposed serrations (24,25) adapted to operatively engage with said wings (18a) and additional wing segments (23a) carried on a rod head (23), to thereby produce angular movements of said rod (18) causing said wings (18a) to pass through the port (27) and to get stuck in the case diaphragm (26), respectively.

2. A device according to Claim 1, wherein the rod end (23), telescoping inside said case (12), is formed with a seat for retaining therein a ring seal (22) of an elastomeric material frictionally engaging with the inside surface of said case (12).

3. A device according to the preceding claims, wherein said opposed case serrations (24,25) have sawtooth profiles with inclined surfaces, and wherein said rod wings (18a) and rod head wing segments (23a) have correspondingly inclined surface bevels (18b,23b).

4. A device according to the preceding claims, wherein said tripping diaphragm (26) is interposed to opposed, respectively inner (25) and outer (24), serrations on said case (12).

5. A device according to the preceding claims, wherein said contoured port (27) in the tripping diaphragm (26) has a cross configuration with arms at 90° intervals, and wherein the angular pitch of said opposed serrations (24,25) is equal to one fourth of a right angle.

6. A device according to the preceding claims, wherein four operative phases are provided between the passage through and tripping of said rod (18) against said case diaphragm (26) which are implemented by means of corresponding axial forces being applied to said rod in opposite directions.

7. A device according to the preceding claims, wherein two axial compressive forces are applied to said rod (18) by corresponding element opening and closing manual pressures, and the extension forces are applied by an elastic means (15) biasing said element toward the open position thereof.

8. A device according to Claim 7, wherein said elastic means is incorporated to the device and accommodated in an axial cavity within said rod.

9. A device according to the preceding claims, wherein said rod(18) is secured pivotally (19) to the tilting structure (11) and said case (12) is connected pivotally to the stationary support (13) carrying said structure, or vice versa.

1/3

0131909

Fig. 1

Fig. 3

2/3

0131909

Fig. 2

Fig. 4

Fig. 5

Fig. 6

Fig. 7